# EUROPEAN PATENT APPLICATION

(11) **EP 4 583 603 A1**
(43) Date of publication of application: **09.07.2025**
(21) Application number: 22956992.6
(22) Date of filing: 02.09.2022
(51) Int. Cl.: H04W 72/04, H04L 5/00

(54) **INFORMATION INDICATION METHOD AND APPARATUS, DEVICE AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/116799
(87) International publication number: WO 2024/045171

(57) **Abstract**

The present application relates to the field of mobile communications. Disclosed are an information indication method and apparatus, a device and a storage medium. The method comprises: a terminal receiving first indication information sent by a network device, and determining, according to the first indication information, whether first DCI comprises a first information domain, wherein the first information domain is used for instructing the terminal to use M TCI states to carry out physical downlink shared channel (PDSCH) reception, and the TCI states comprise at least one of a joint TCI state, a downlink TCI state and an uplink TCI state, M being a positive integer. The present application provides a solution of determining, by means of indication information, whether control information comprises an information domain indicating a TCI state to be used, thereby ensuring the accuracy of decoding control information, and thus improving the accuracy of a determined TCI state to ensure the reliability of transmission.

## Description

### TECHNICAL FIELD

The present application relates to the field of mobile communication, and in particular, to an information indication method and apparatus, device and storage medium.

### BACKGROUND

In a mobile communication system, a data transmission performed between a network device and a terminal through a beam is provided. The indication method of the beam is specifically to indicate the Quasi Co-Location (QCL) parameters corresponding to different channels through the transmission configuration indication (TCI) state.

Currently, a unified TCI state is proposed. This unified TCI state currently includes separate indications for uplink transmission and downlink transmission, that is, it includes a downlink TCI state and an uplink TCI state, or a joint TCI state for uplink-downlink combined indication. That is, if the network device indicates a downlink TCI state for downlink transmission, then this downlink TCI state may be used for the terminal's physical downlink shared channel (PDSCH), physical downlink control channel (PDCCH), and a portion of channel state information reference signal (CSI-RS). If the network device indicates an uplink TCI state for uplink transmission, then this uplink TCI state may be used for the terminal's physical uplink shared channel (PUSCH), physical uplink control channel (PUCCH), and a portion of sounding reference signal (SRS). If the network device indicates a joint TCI state, then this joint TCI state may be used for both uplink transmission and downlink transmission simultaneously.

Currently, a new approach has been proposed to introduce a new indication field in the control information sent by the network device to indicate the TCI state used by the PDSCH. However, how the terminal determines whether this indication field exists has become an urgent problem to be solved.

### SUMMARY

The embodiments of the present application provide an information indication method and apparatus, device and storage medium, ensuring the accuracy of decoding control information, thereby improving the accuracy of a determined TCI state to ensure the transmission reliability. The technical solutions are as follows.

According to a first aspect of the present application, an information indication method is provided, which is performed by a terminal and includes:
receiving first indication information sent by a network device, and determining whether first downlink control information (DCI) includes a first information field according to the first indication information, where the first information field is used for instructing the terminal to use M TCI states for receiving a physical downlink shared channel (PDSCH), the TCI states include at least one of a joint TCI state, a downlink TCI state, and an uplink TCI state, and M is a positive integer.

According to a second aspect of the present application, an information indication method is provided, which is performed by a network device and includes:
sending first indication information to a terminal, where the first indication information is used for the terminal to determine whether first downlink control information (DCI) includes a first information field, and the first information field is used for instructing the terminal to use M TCI states for receiving a physical downlink shared channel (PDSCH), where the TCI states include at least one of a joint TCI state, a downlink TCI state, and an uplink TCI state, and M is a positive integer.

According to a third aspect of the present application, an information indication apparatus is provided, which includes:
a receiving module, configured to receive first indication information sent by a network device; and
a processing module, configured to determine whether first downlink control information (DCI) includes a first information field according to the first indication information, where the first information field is used for instructing the terminal to use M TCI states for receiving a physical downlink shared channel (PDSCH), the TCI states include at least one of a joint TCI state, a downlink TCI state, and an uplink TCI state, and M is a positive integer.

According to a fourth aspect of the present application, an information indication apparatus is provided, which includes:
a sending module, configured to send first indication information to a terminal, where the first indication information is used for the terminal to determine whether first downlink control information (DCI) includes a first information field, and the first information field is used for instructing the terminal to use M TCI states for receiving a physical downlink shared channel (PDSCH), where the TCI states include at least one of a joint TCI state, a downlink TCI state, and an uplink TCI state, and M is a positive integer.

According to a fifth aspect of the present application, a terminal is provided, which includes: a processor; a transceiver, connected to the processor; and a memory, configured to store an executable instruction of the processor, where the processor is configured to load and perform the executable instruction to implement the information indication method according to the above aspects.

According to a sixth aspect of the present application, a network device is provided, which includes: a processor; a transceiver, connected to the processor; and a memory, configured to store an executable instruction of the processor, where the processor is configured to load and perform the executable instruction to implement the information indication method according to the above aspects.

According to a seventh aspect of the present application, a communication system is provided, which includes a terminal and a network device, where the terminal is configured to implement the information indication method according to the first aspect above, and the network device is configured to implement the information indication method according to the second aspect above.

According to an eighth aspect of the present application, a computer-readable storage medium is provided, in which executable program codes are stored, and the executable program codes are loaded and performed by a processor to implement the information indication method according to the above aspects.

According to a ninth aspect of the present application, a chip is provided, which includes a programmable logic circuit and/or program instruction, when the chip operates on a terminal or network device, it is used to implement the information indication method according to the above aspects.

According to a tenth aspect of the present application, a computer program product is provided, which, when executed by a processor of a terminal or network device, is configured to implement the information indication method according to the above aspects.

The present application provides a solution for determining whether the control information includes an information field for indicating the used TCI state through indication information, which ensures the accuracy of decoding the control information, thereby improving the accuracy of the determined TCI state to ensure the reliability of transmission.

### BRIEF DESCRIPTION OF THE DRAWINGS

To more clearly illustrate the technical solutions in the embodiments of the present application, the accompanying drawings required for the description of the embodiments will be briefly introduced below. It is evident that the drawings described below are merely some embodiments of the present application. For those skilled in the art, other drawings may be obtained based on these drawings without creative effort.
FIG. 1 shows a block diagram of a communication system provided by an exemplary embodiment of the present application;
FIG. 2 shows a block diagram of another communication system provided by an exemplary embodiment of the present application;
FIG. 3 shows a flowchart of an information indication method provided by an exemplary embodiment of the present application;
FIG. 4 shows a flowchart of an information indication method provided by an exemplary embodiment of the present application;
FIG. 5 shows a flowchart of an information indication method provided by an exemplary embodiment of the present application;
FIG. 6 shows a block diagram of an information indication apparatus provided by an exemplary embodiment of the present application;
FIG. 7 shows a block diagram of an information indication apparatus provided by an exemplary embodiment of the present application; and
FIG. 8 shows a structural schematic diagram of a communication device provided by an exemplary embodiment of the present application.

### DETAILED DESCRIPTION

To make the purpose, technical solution, and advantages of the present application clearer, the following will provide a further detailed description of the implementation of the present application with reference to the accompanying drawings.

Here, exemplary embodiments will be described in detail, with examples shown in the accompanying drawings. Unless otherwise indicated, the same numerals in different drawings refer to the same or similar elements when the following description refers to the accompanying drawings. The implementations described in the following exemplary embodiments do not represent all implementations consistent with the present application. Instead, they are merely examples of apparatuses and methods consistent with some aspects of the present application as detailed in the appended claims.

The terms used in the present application are solely for the purpose of describing specific embodiments and are not intended to limit the scope of the present application. The use of singular forms such as "a", "the", and "this" in the present application and the appended claims are also intended to include the plural form, unless the context clearly indicates otherwise. It should also be understood that the term "and/or" used herein refers to and includes any or all possible combinations of one or more associated listed items.

It should be understood that although the terms such as "first", "second", "third" may be used in the present application to describe various information, such information should not be limited to these terms. These terms are only used to distinguish information of the same type from each other. For example, without departing from the scope of the present application, "first information" may also be referred to as "second information" and similarly, "second information" may also be referred to as "first information". Depending on the context, for example, the word "if" used herein may be interpreted as "in a case that", "when" or "in response to determining".

It should be noted that the information (including but not limited to user device information, user personal information, etc.), data (including but not limited to data used for analysis, stored data, displayed data, etc.), and signals involved in the present application are all authorized by the user or fully authorized by all parties involved. The collection, use, and processing of relevant data must comply with relevant laws, regulations, and standards of relevant countries and regions.

Firstly, the nouns involved in the present application are explained.

TCI state: This TCI state is used to indicate QCL parameters. That is to say, the terminal and network device in the present application will perform data transmission based on the QCL parameters indicated by the TCI state. QCL type D corresponds to at least one of Rx spatial parameter, UL spatial filter, spatial setting, and spatial relationship information, etc. QCL type D is commonly referred to as a beam.

If the communication frequency band is within frequency range 2, the highfrequency channel attenuates rapidly. Therefore, data transmission is carried out in a beam-based manner.

Specifically, there are channels and/or reference signals between network devices and terminals. The channels include at least one of PDCCH, PDSCH, PUSCH, or PUCCH. The reference signals include at least one of CSI-RS, SRS, PRS, or TRS. The CSI-RS includes at least one of the CSI-RS for channel state information measurement, the CSI-RS for beam measurement, or the CSI-RS for path loss estimation. The SRS includes at least one of the SRS for channel state information measurement based on codebook or non-codebook, the SRS for beam measurement, or the SRS for positioning measurement. The TCI states of the above reference signals are indicated independently. The PDCCH and PUCCH use MAC CE to activate their respective TCI states, respectively. The PDSCH and PUSCH use the DCI signaling to indicate their respective TCI states, respectively.

In addition, the present application proposes to indicate the TCI state of at least one channel and/or signal through a unified TCI state. The unified TCI state currently includes separate indications for uplink transmission and downlink transmission, namely a downlink TCI state and an uplink TCI state, or a joint TCI state for uplink-downlink combined indication. That is, if the network device indicates a downlink TCI state for downlink transmission, then this downlink TCI state may be used for the terminal's physical downlink shared channel (PDSCH), physical downlink control channel (PDCCH), and a portion of channel state information reference signal (CSI-RS). If the network device indicates an uplink TCI state for uplink transmission, then this uplink TCI state may be used for the terminal's physical uplink shared channel (PUSCH), physical uplink control channel (PUCCH), and a portion of sounding reference signal (SRS). If the network device indicates a joint TCI state, then this joint TCI state may be used for both uplink transmission and downlink transmission simultaneously.

Secondly, the application scenarios of the present application are explained as follows.

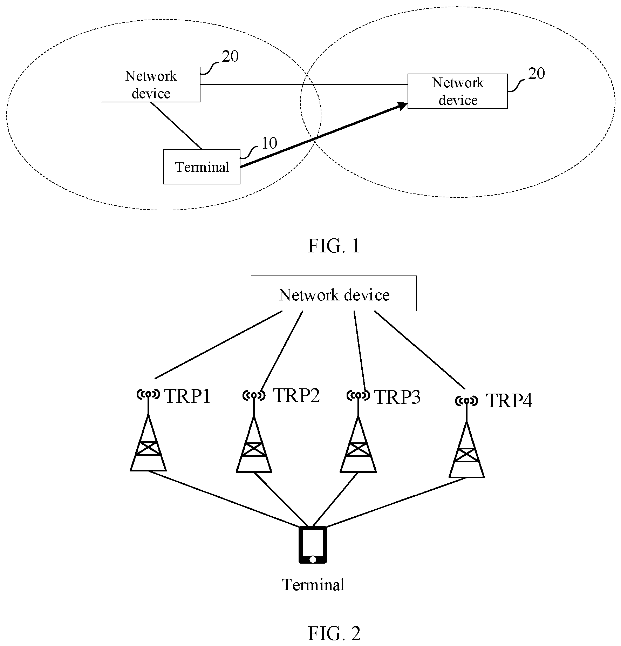

FIG. 1 shows a block diagram of a communication system provided by an exemplary embodiment of the present application, which may include: a terminal 10 and a network device 20.

The number of terminals 10 is typically multiple, and one or more terminals 10 may be distributed within the cell managed by each network device 20. The terminals 10 may include various handheld devices, in-vehicle devices, wearable devices, computing devices, or other processing devices connected to wireless modems, as well as various forms of user equipment (UE), mobile stations (MS), and so on, all of which possess wireless communication functions. For ease of description, in the embodiments of the present application, the above devices are collectively referred to as terminals.

The network device 20 is an apparatus deployed in the access network to provide wireless communication functionality for the terminal 10. For ease of description, in the embodiments of the present application, the above apparatus providing wireless communication functionality for the terminal 10 are collectively referred to as network devices. A connection may be established between the network device 20 and the terminal 10 through an air interface, so that communication is performed through this connection, which includes the interaction of signaling and data. There may be multiple network devices 20, and two adjacent network devices 20 may communicate with each other via wired or wireless means. The terminal 10 may perform beam reports transmission between different network devices 20, that is, establish connections with different network devices 20.

The network device 20 may include various forms of macro base stations, micro base stations, relay stations, access points, and so on. In systems employing different wireless access technologies, the terminology for devices with network device functions may vary. For example, in a 5G NR (New Radio) system, such devices are referred to as gNodeB or gNB. As the communication technology evolves, the term "network device" may undergo changes.

Optionally, at least two transmission reception points (TRPs) are provided on the network device 20; or there are at least two network devices 20, each provided with at least one TRP, meaning that at least two network devices 20 are provided with at least two TRPs. In other words, these at least two TRPs may originate from the same cell or different cells.

In some embodiments, referring to FIG. 2, four TRPs are provided on the network device 20, and services may be provided to the terminal 10 through these four TRPs. Therefore, the terminal 10 may perform data transmission based on these four TRPs.

When the data transmission between the network device 20 and the terminal 10 is performed through multiple TRPs, it is referred to as an M-TRP transmission, whereas when the data transmission between the network device 20 and the terminal 10 is performed through a single TRP, it is referred to as an S-TRP transmission.

In the case of M-TRP, if a plurality of sets of TCI states are indicated through the TCI state indication information, it is still necessary to achieve the dynamic switching between the M-TRP and the S-TRP of PDSCH. Therefore, a new indication field is proposed to be introduced in a first DCI to indicate that the TCI state used by PDSCH is one or more TCI states indicated by the TCI field.

The "5G NR system" in the embodiments of the present application may also be referred to as a 5G system or an NR system, and those skilled in the art can understand its meaning. The technical solutions described in the embodiments of the present application may be applied to both the 5G NR system and the subsequent evolution systems of the 5G NR system.

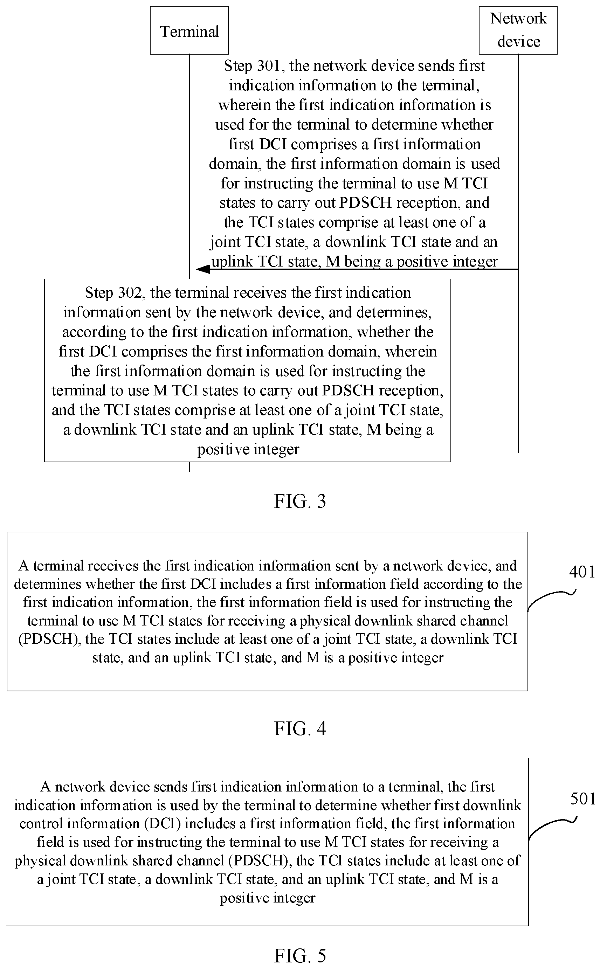

FIG. 3 illustrates a flowchart of an information indication method provided by an exemplary embodiment of the present application, which may be exemplarily applied to the terminal and the network device as shown in FIG. 1. The method includes at least part of the following contents.

In step 301, the network device sends first indication information to the terminal. The first indication information is used by the terminal to determine whether first downlink control information (DCI) includes a first information field. The first information field is used for instructing the terminal to use M TCI states for receiving a physical downlink shared channel (PDSCH). The TCI states include at least one of a joint TCI state, a downlink TCI state, and an uplink TCI state. M is a positive integer.

In step 302, the terminal receives the first indication information sent by the network device, and determines whether the first DCI includes the first information field based on the first indication information. The first information field is used for instructing the terminal to use M TCI states for receiving the physical downlink shared channel (PDSCH). The TCI states include at least one of a joint TCI state, a downlink TCI state, and an uplink TCI state. M is a positive integer.

The first DCI refers to the information about the parameters configured by the network device for the terminal.

The first indication information indicates whether the first DCI includes the first information field. For example, if the first indication information is 1, it indicates that the first information field is included in the first DCI, and if the first indication information is 0, it indicates that the first information field is not included in the first DCI.

The first information field instructs the terminal to use M TCI states for performing PDSCH reception. In other words, the terminal performs PDSCH reception based on the selected M TCI states.

In some embodiments, the network device sends second indication information to the terminal to indicate N TCI states through this second indication information. The terminal receives the second indication information sent by the network device and may determine the N TCI states based on the second indication information. N is a positive integer, and M is not greater than N. The M TCI states belong to a subset of the N TCI states indicated by the second indication information. In other words, the first information field instructs the terminal to use M TCI states of the N TCI states indicated by the second indication information for receiving PDSCH. The terminal selects M TCI states from the N TCI states indicated by the second indication information for receiving PDSCH.

The second indication information is used to indicate N TCI states. That is to say, the network device sends the second indication information indicating the N TCI states to the terminal. After receiving the second indication information, the terminal may determine the N TCI states configured by the network device for the terminal based on the second indication information.

For example, the N TCI states indicated by the second indication information include TCI state #1, TCI state #2, TCI state #3, TCI state #4, TCI state #5, and TCI state #6. The M TCI states indicated by the first information field are TCI state #1, TCI state #2, TCI state #4, and TCI state #5 among the N TCI states.

For example, the N TCI states indicated by the second indication information include TCI state #1 and TCI state #2, and the M TCI state indicated by the first information field is TCI state #1 among the N TCI states.

For example, the N TCI states indicated by the second indication information include TCI state #1, TCI state #2, TCI state #3, and TCI state #4, and the M TCI states indicated by the first information field are TCI state #1 and TCI state #2 among the N TCI states.

The TCI state includes at least one of the joint TCI state, the downlink TCI state, and the uplink TCI state. The joint TCI state may be used for both uplink transmission and downlink transmission. The uplink TCI state is used for the uplink transmission. The downlink TCI state is used for the downlink transmission.

In the embodiments of the present application, the network device sends first indication information to the terminal for the terminal to determine whether the first DCI includes the first information field. Upon receiving the first indication information, the terminal may determine whether the first DCI includes the first information field based on the first indication information, and further determine whether the M TCI states used may be determined based on the first information field.

It should be noted that the steps performed by the terminal in the embodiments of the present application may form a new embodiment separately, and the steps performed by the network device may also form a new embodiment separately. The embodiments of the present application are not limited thereto.

The present application provides a solution for determining, by means of indication information, whether the control information includes an information field for indicating the TCI state to be used, to ensure the accuracy of decoding the control information, thereby improving the accuracy of the determined TCI state and ensuring the reliability of transmission.

The embodiment shown in FIG. 3 explains the terminal receiving the first indication information. Specifically, the terminal will determine whether the first DCI includes the first information field according to the first indication information. The following illustrates how the terminal determines whether the first DCI includes the first information field according to the first indication information.

In some embodiments, if the first indication information is used to indicate a target PDSCH transmission scheme, the terminal may determine whether the first DCI includes the first information field according to whether the first indication information indicates the target PDSCH transmission scheme.

In the case where the first indication information indicates the target PDSCH transmission scheme, it is determined that the first DCI includes the first information field. That is to say, if the PDSCH transmission scheme indicated by the first indication information is the target PDSCH transmission scheme, it indicates that the first DCI includes the first information field.

The target PDSCH transmission scheme refers to the PDSCH transmission scheme indicated by the network device for the terminal that requires the use of at least two TCI states.

Optionally, the target PDSCH transmission scheme includes at least one of the following.

### (1) Frequency-division multiplexing scheme A.

This frequency-division multiplexing scheme A may also be represented by FDM scheme A. This frequency-division multiplexing scheme A means that two TCI states correspond to different frequency domain resources and correspond to the same redundancy version. That is to say, the terminal may assume that different TCI states are used to receive a PDSCH transmission occasion of a TB in different frequency domain resources.

### (2) Frequency-division multiplexing scheme B.

This frequency-division multiplexing scheme B may also be represented by FDM scheme B. This frequency-division multiplexing scheme B means that two TCI states correspond to different frequency domain resources and correspond to different redundancy versions. That is to say, the terminal may assume that different TCI states are used to receive two PDSCH transmission occasions of a TB in different frequency domain resources.

### (3) Time-division multiplexing scheme A.

This time-division multiplexing scheme A may also be represented by TDM scheme A. This time-domain multiplexing scheme A means that different TCI states correspond to different time-domain resources.

### (4) Single-frequency network scheme A.

This single-frequency network scheme A may also be represented by SFN-scheme A. This single-frequency network scheme A means that if the network device indicates at least two TCI states, the terminal assumes that the DMRS port used for transmitting PDSCH is quasi-co-located with a reference signal corresponding to the at least two TCI states.

### (5) Single-frequency network scheme B.

This single-frequency network scheme B may also be represented by SFN-scheme B. This single-frequency network scheme B means that if the network device indicates at least two TCI states, the terminal assumes that the DMRS port used for transmitting PDSCH is quasi-co-located with a reference signal corresponding to the at least two TCI states, except for the quasi-co-location parameters of the last TCI state: {Doppler shift, Doppler spread}.

### (6) Transmission scheme based on two code division multiplexing (CDM) groups.

The DMRS port used for transmitting PDSCH corresponds to at least two code division multiplexing (CDM) groups, and the TCI states corresponding to the at least two CDM groups are different.

In the embodiment of the present application, if the terminal determines that the PDSCH transmission scheme indicated by the first indication information is any of the above six PDSCH transmission schemes, the terminal may determine that the first DCI includes the first information field.

It should be noted that the embodiment of the present application is described by taking an example where the terminal determines that the first DCI includes the first information field when determining that the PDSCH transmission scheme indicated by the first indication information is the target PDSCH transmission scheme. In another embodiment, the terminal also determines that the first DCI does not include the first information field.

Optionally, in the case where the first indication information does not indicate the target PDSCH transmission scheme, the terminal determines that the first information field is not included in the first DCI.

In the embodiment of the present application, the terminal will determine that the first information field is included in the first DCI only when the first indication information indicates the target PDSCH transmission scheme. If the first indication information does not indicate the target PDSCH transmission scheme, the terminal determines that the first information field is not included in the first DCI.

It should be noted that the embodiments of the present application are described by taking the example of whether the first indication information indicates the target PDSCH transmission scheme. In another embodiment, the terminal may also determine that the first information field is not included in the first DCI by using other ways.

Optionally, in the case of not receiving the first indication information, the terminal determines that the first DCI does not include the first indication information. That is to say, if the terminal does not receive the first indication information, it means that the network device does not indicate to the terminal, via the first indication information, whether the first DCI includes the first information field. Therefore, the terminal may determine that the first DCI does not include the first information field.

The embodiment of the present application provides a solution for determining whether the first DCI includes the first information field according to the PDSCH transmission scheme indicated by the first indication information, which ensures the reliability of determining whether the first DCI includes the first information field and improves the accuracy of the terminal in decoding the first DCI, thereby ensuring the reliability of determining the PDCCH that carries the first DCI and the corresponding PDSCH transmission.

The embodiment shown in FIG. 3 illustrates the terminal receiving the first indication information. In the following, an explanation will be given on how the terminal determines whether the first DCI includes the first information field according to the first indication information.

In some embodiments, the first indication information is carried in a radio resource control (RRC) signaling. The RRC signaling is used to indicate whether the first DCI includes the first information field. That is to say, the RRC signaling directly carries information for indicating whether the first DCI includes the first information field. For example, this RRC signaling uses 1-bit to indicate the information on whether the first DCI includes the first information field. If the 1-bit in the RRC signaling is 1, it indicates that the first DCI includes the first information field; if the 1-bit in the RRC signaling is 0, it indicates that the first DCI includes the first information field. For example, this RRC signaling uses "enable" to indicate the information that the first DCI includes the first information field; and/or uses "disable" to indicate the information that the first DCI does not include the first information field.

In the solution provided in the embodiments of the present application, the terminal may determine whether the first DCI includes the first information field based on the first indication information, ensuring the reliability of the terminal's determination on whether the first DCI includes the first information field and improving the accuracy of the terminal in decoding of the first DCI, thereby ensuring the reliability of determining the PDCCH that carries the first DCI and the reception of the corresponding PDSCH.

In the embodiment shown in FIG. 3, it is proposed whether the first DCI includes the first information field, and the parameters included in the first DCI are described below.

In some embodiments, the first DCI includes downlink resource allocation information, or the first DCI does not include downlink resource allocation information.

The downlink resource configuration information refers to the information about resources configured for downlink transmission for the terminal.

Optionally, the downlink resource allocation information includes at least one of the following.
(1) Time-domain resource information for PDSCH.
   The time-domain resource information is used to indicate time-domain resources, that is to say, the time-domain resource information indicates the time-domain resources used for PDSCH.
(2) Modulation and coding scheme for PDSCH.
(3) Redundancy version for PDSCH.
(4) Frequency domain resource information for PDSCH.
   The frequency domain resource information is used to indicate frequency domain resources, that is to say, the frequency domain resource information indicates the frequency domain resources used for PDSCH.
(5) Hybrid Automatic Repeat reQuest (HARQ) processing number.

It should be noted that the embodiments of the present application are illustrated by taking several parameters exemplified above as examples. However, the present application is not limited to these exemplified parameters and may also include other relevant parameters, which is not limited in the embodiments of the present application.

In some embodiments, the first DCI that does not include downlink resource allocation information has the following features, namely, including at least one of the following.
(1) A modulation and coding scheme field for the PDSCH is all '1'.
(2) A redundancy version field used for the PDSCH is all '1'.
(3) A new data indicator (NDI) used to indicate whether the PDSCH is new data is '0'.
(4) A frequency domain resource information allocation field for the PDSCH is either all '0' or all '1'.

In the embodiments of the present application, the first DCI does not include downlink resource allocation information, which means that the first DCI includes at least one of the above four information fields with the above special bit value. For example, the frequency domain resource information allocation field for PDSCH in the first DCI is either all '0' or all '1'.

It should be noted that the embodiments of the present application are described by taking the features of the first DCI that does not include downlink resource allocation information as an example. In other embodiments, the features of the first DCI that includes downlink resource allocation information are opposite to those of the above first DCI that does not include downlink resource allocation information.

Optionally, the first DCI including downlink resource allocation information has at least one of the following features.
(1) The modulation and coding scheme field for the PDSCH is not all '1'.
(2) The redundancy version field for PDSCH is not all '1'.
(3) The NDI used to indicate whether the PDSCH is new data is not '0'.
(4) The frequency domain resource information allocation field for the PDSCH is not all '0' or not all '1'.

The embodiment shown in FIG. 3 proposes that the second indication information may indicate N TCI states. The following explains how the second indication information indicates the N TCI states.

In some embodiments, the second indication information is carried in a first medium access control (MAC) control element (CE), and the first MAC CE is used to indicate N TCI states.

Optionally, the first MAC CE is used to indicate the N TCI states corresponding to one codepoint in the TCI field of the first downlink control information (DCI). That is, only the first MAC CE is sent and the DCI is not sent. The N TCI states indicated in the first MAC CE only correspond to one codepoint in the TCI field of the DCI. Therefore, there is no need for the base station to additionally send DCI to the terminal to indicate the codepoint, thereby saving signaling overhead.

In some embodiments, the second indication information is carried in a second MAC CE and a second DCI. The second MAC CE is used to indicate the N TCI states respectively corresponding to at least two codepoints in the TCI field of the second DCI, and the second DCI is used to indicate one of the at least two codepoints. That is, both the second MAC CE and the second DCI are used to indicate the second indication information. The second MAC CE indicates the N TCI states respectively corresponding to at least two codepoints in the TCI field of the second DCI, and the second DCI is used to indicate a codepoint. By querying the second MAC CE, the N TCI states corresponding to the codepoint are obtained. In this case, the second MAC CE can indicate multiple sets of codepoint configurations, and each set of codepoint configurations corresponding to N TCI states. It should be noted that for each codepoint corresponding to N TCI states, the value of N corresponding to each codepoint may be the same or different.

In the embodiments of the present application, the first DCI and the second DCI may be the same DCI, or the first DCI and the second DCI may be different DCIs, which is not limited in the embodiments of the present application.

It should be noted that the embodiments of the present application describe how the second indication information indicates N TCI states. However, in another embodiment, X TCI states among the N TCI states are used for the transmission of at least one other channel/signal. X is a positive integer and X is not greater than N.

The signal may be understood as a reference signal. The other channel includes a channel other than the PDSCH channel.

In the embodiments of the present application, the other channel may also be transmitted using some or all of the N TCI states, and additional signals may also be transmitted using some or all of the N TCI states.

In some embodiments, the other channel includes at least one of PUCCH, PUSCH, or PDCCH. That is to say, at least one of PUCCH, PUSCH, or PDCCH may utilize X TCI states among the N TCI states.

In some embodiments, at least one signal includes at least one of CSI-RS or SRS. That is to say, at least one of CSI-RS or SRS may utilize X TCI states among the N TCI states.

It should be noted that the X TCI states in the present application are a subset of the N TCI states, that is, X may be less than or equal to N. In the following, the X TCI states will be specifically described.

In some embodiments, the other channel includes the PDCCH, or the at least one signal is the CSI-RS, then the X TCI states are a subset of the N TCI states. The TCI states include a joint TCI state and/or a downlink TCI state.

In some embodiments, the other information includes at least one of the PUSCH or the PUCCH, or at least one signal includes the SRS. The X TCI states include a joint TCI state and/or an uplink TCI state, and the N TCI states indicated by the second indication information include the joint TCI state and/or the uplink TCI state. The X TCI states are a subset of the N TCI states.

It should be noted that the above embodiments may be split into new embodiments, or combined with other embodiments to form new embodiments. The present application does not impose any restrictions on the combinations between embodiments.

FIG. 4 illustrates a flowchart of an information indication method provided by an exemplary embodiment of the present application, which may be exemplarily applied to the terminal shown in FIG. 1. The method includes at least some of the following contents.

In step 401, the terminal receives the first indication information sent by the network device, and determines whether the first DCI includes the first information field based on the first indication information. The first information field is used for instructing the terminal to use M TCI states for receiving the physical downlink shared channel (PDSCH). The TCI states include at least one of a joint TCI state, a downlink TCI state, and an uplink TCI state. M is a positive integer.

The first DCI refers to the information about the parameters configured by the network device for the terminal.

The first indication information indicates whether the first DCI includes the first information field. For example, if the first indication information is 1, it indicates that the first information field is included in the first DCI, and if the first indication information is 0, it indicates that the first information field is not included in the first DCI.

The first information field instructs the terminal to use M TCI states for performing PDSCH reception. In other words, the terminal performs PDSCH reception based on the selected M TCI states.

In some embodiments, the terminal receives second indication information sent by the network device. Based on the second indication information, the terminal may determine N TCI states. N is a positive integer, and M is not greater than N. The M TCI states belong to a subset of the N TCI states indicated by the second indication information. In other words, the first information field instructs the terminal to use M TCI states of the N TCI states indicated by the second indication information for receiving PDSCH. The terminal selects M TCI states from the N TCI states indicated by the second indication information for receiving PDSCH.

The second indication information is used to indicate N TCI states. That is to say, the network device sends the second indication information that indicates the N TCI states to the terminal. After receiving the second indication information, the terminal may determine the N TCI states configured by the network device for the terminal based on the second indication information.

For example, the N TCI states indicated by the second indication information include TCI state #1, TCI state #2, TCI state #3, TCI state #4, TCI state #5, and TCI state #6. The M TCI states indicated by the first information field are TCI state #1, TCI state #2, TCI state #4, and TCI state #5 among the N TCI states.

For example, the N TCI states indicated by the second indication information include TCI state #1 and TCI state #2, and the M TCI state indicated by the first information field is TCI state #1 among the N TCI states.

For example, the N TCI states indicated by the second indication information include TCI state #1, TCI state #2, TCI state #3, and TCI state #4, and the M TCI states indicated by the first information field are TCI state #1 and TCI state #2 among the N TCI states.

The TCI state includes at least one of the joint TCI state, the downlink TCI state, and the uplink TCI state. The joint TCI state may be used for both uplink transmission and downlink transmission. The uplink TCI state is used for the uplink transmission. The downlink TCI state is used for the downlink transmission.

In the embodiment of the present application, the network device sends first indication information to the terminal for indicating whether the first DCI includes the first information field. Upon receiving the first indication information, the terminal may determine whether the first DCI includes the first information field based on the first indication information, and further determine whether the M TCI states to be used may be determined based on the first information field.

The present application provides a solution for determining, by means of indication information, whether the control information includes an information field for indicating the TCI state to be used, to ensure the accuracy of decoding the control information, thereby improving the accuracy of the determined TCI state and ensuring the reliability of transmission.

The embodiment shown in FIG. 4 explains the terminal receiving the first indication information. Specifically, the terminal will determine whether the first DCI includes the first information field according to the first indication information. The following illustrates how the terminal determines whether the first DCI includes the first information field according to the first indication information.

In some embodiments, if the first indication information is used to indicate a target PDSCH transmission scheme, the terminal may determine whether the first DCI includes the first information field according to whether the first indication information indicates the target PDSCH transmission scheme.

In the case where the first indication information indicates the target PDSCH transmission scheme, it is determined that the first DCI includes the first information field. That is to say, if the PDSCH transmission scheme indicated by the first indication information is the target PDSCH transmission scheme, it indicates that the first DCI includes the first information field.

The target PDSCH transmission scheme refers to the PDSCH transmission scheme indicated by the network device for the terminal that requires the use of at least two TCI states.

Optionally, the target PDSCH transmission scheme includes at least one of the following.

### (1) Frequency-division multiplexing scheme A.

This frequency-division multiplexing scheme A may also be represented by FDM scheme A. This frequency-division multiplexing scheme A means that two TCI states correspond to different frequency domain resources and correspond to the same redundancy version. That is to say, the terminal may assume that different TCI states are used to receive a PDSCH transmission occasion of a TB in different frequency domain resources.

### (2) Frequency-division multiplexing scheme B.

This frequency-division multiplexing scheme B may also be represented by FDM scheme B. This frequency-division multiplexing scheme B means that two TCI states correspond to different frequency domain resources and correspond to different redundancy versions. That is to say, the terminal may assume that different TCI states are used to receive two PDSCH transmission occasions of a TB in different frequency domain resources.

### (3) Time-division multiplexing scheme A.

This time-division multiplexing scheme A may also be represented by TDM scheme A. This time-domain multiplexing scheme A means that different TCI states correspond to different time-domain resources.

### (4) Single-frequency network scheme A.

This single-frequency network scheme A may also be represented by SFN-scheme A. This single-frequency network scheme A means that if the network device indicates at least two TCI states, the terminal assumes that the DMRS port used for transmitting PDSCH is quasi-co-located with a reference signal corresponding to the at least two TCI states.

### (5) Single-frequency network scheme B.

This single-frequency network scheme B may also be represented by SFN-scheme B. This single-frequency network scheme B means that if the network device indicates at least two TCI states, the terminal assumes that the DMRS port used for transmitting PDSCH is quasi-co-located with a reference signal corresponding to the at least two TCI states, except for the quasi-co-location parameters of the last TCI state: {Doppler shift, Doppler spread}.

### (6) Transmission scheme based on two code division multiplexing (CDM) groups.

The DMRS port used for transmitting PDSCH corresponds to at least two CDM groups, and the TCI states corresponding to the at least two CDM groups are different.

In the embodiment of the present application, if the terminal determines that the PDSCH transmission scheme indicated by the first indication information is any of the above six PDSCH transmission schemes, the terminal may determine that the first DCI includes the first information field.

It should be noted that the embodiment of the present application is described by taking an example where the terminal determines that the first DCI includes the first information field when determining that the PDSCH transmission scheme indicated by the first indication information is the target PDSCH transmission scheme. In another embodiment, the terminal also determines that the first DCI does not include the first information field.

Optionally, in the case where the first indication information does not indicate the target PDSCH transmission scheme, the terminal determines that the first information field is not included in the first DCI.

In the embodiment of the present application, the terminal will determine that the first information field is included in the first DCI only when the first indication information indicates the target PDSCH transmission scheme. If the first indication information does not indicate the target PDSCH transmission scheme, the terminal determines that the first information field is not included in the first DCI.

It should be noted that the embodiments of the present application are described by taking the example of whether the first indication information indicates the target PDSCH transmission scheme. In another embodiment, the terminal may also determine that the first information field is not included in the first DCI by using other ways.

Optionally, in the case of not receiving the first indication information, the terminal determines that the first DCI does not include the first indication information. That is to say, if the terminal does not receive the first indication information, it means that the network device does not indicate to the terminal, via the first indication information, whether the first DCI includes the first information field. Therefore, the terminal may determine that the first DCI does not include the first information field.

The embodiment of the present application provides a solution for determining whether the first DCI includes the first information field according to the PDSCH transmission scheme indicated by the first indication information, which ensures the reliability of determining whether the first DCI includes the first information field and improves the accuracy of the terminal in decoding the first DCI, thereby ensuring the reliability of determining the PDCCH that carries the first DCI and the corresponding PDSCH transmission.

The embodiment shown in FIG. 4 illustrates the terminal receiving the first indication information. The following describes how the terminal determines whether the first DCI includes the first information field according to the first indication information.

In some embodiments, the first indication information is carried in an RRC signaling, which is used to indicate whether the first DCI includes the first information field. That is to say, the RRC signaling directly carries information for indicating whether the first DCI includes the first information field. For example, the RRC signaling indicates the information about whether the first DCI includes the first information field by using 1-bit. If the 1-bit in the RRC signaling is 1, it indicates that the first information field is included in the first DCI; if the 1-bit in the RRC signaling is 0, it indicates that the first information field is included in the first DCI. For example, this RRC signaling uses "enable" to indicate the information that the first DCI includes the first information field; and/or uses "disable" to indicate the information that the first DCI does not include the first information field.

In the solution provided in the embodiments of the present application, the terminal may determine whether the first DCI includes the first information field based on the first indication information, which ensures the reliability of the terminal's determination on whether the first DCI includes the first information field and improves the accuracy of the terminal in decoding of the first DCI, thereby ensuring the reliability of determining the PDCCH that carries the first DCI and the corresponding PDSCH transmission.

In the embodiment shown in FIG. 4, it is proposed whether the first DCI includes the first information field, and the parameters included in the first DCI are described below.

In some embodiments, the first DCI includes downlink resource allocation information, or the first DCI does not include downlink resource allocation information.

The downlink resource configuration information refers to the information about resources configured for the terminal for downlink transmission.

Optionally, the downlink resource allocation information includes at least one of the following.
(1) Time-domain resource information for PDSCH.
   The time-domain resource information is used to indicate time-domain resources, that is to say, the time-domain resource information indicates the time-domain resources used for PDSCH.
(2) Modulation and coding scheme field for PDSCH.
(3) Redundancy versions for PDSCH.
(4) Frequency domain resource information for PDSCH.
   The frequency domain resource information is used to indicate frequency domain resources, that is to say, the frequency domain resource information indicates the frequency domain resources used for PDSCH.
(5) Hybrid Automatic Repeat reQuest (HARQ) processing number.

It should be noted that the embodiments of the present application are described by taking several parameters exemplified above as examples. However, the present application is not limited to these exemplified parameters, and may also include other relevant parameters, which is not limited in the embodiments of the present application.

In some embodiments, the first DCI that does not include downlink resource allocation information has the following characteristics, namely, includes at least one of the following.
(1) A modulation and coding scheme field for the PDSCH is all '1'.
(2) A redundancy version field used for the PDSCH is all '1'.
(3) A new data indicator (NDI) used to indicate whether the PDSCH is new data is '0'.
(4) A frequency domain resource information allocation field for the PDSCH is either all '0' or all '1'.

In the embodiments of the present application, the first DCI does not include downlink resource allocation information, which means that the first DCI includes at least one of the above four information fields with the above special bit value. For example, the frequency domain resource information allocation field for PDSCH in the first DCI is either all '0' or all '1'.

It should be noted that the embodiments of the present application are described by taking the features of the first DCI that does not include downlink resource allocation information as an example. In other embodiments, the features of the first DCI that includes downlink resource allocation information are opposite to those of the above first DCI that does not include downlink resource allocation information.

Optionally, the first DCI including downlink resource allocation information has at least one of the following features.
(1) The modulation and coding scheme field for the PDSCH is not all '1'.
(2) The redundancy version field for PDSCH is not all '1'.
(3) The NDI used to indicate whether the PDSCH is new data is not '0'.
(4) The frequency domain resource information allocation field for the PDSCH is not all '0' or not all '1'.

The embodiment shown in FIG. 4 proposes that the second indication information may indicate N TCI states. The following describes how the second indication information indicates the N TCI states.

In some embodiments, the second indication information is carried in a first medium access control (MAC) control element (CE), and the first MAC CE is used to indicate the N TCI states.

Optionally, the first MAC CE is used to indicate the N TCI states corresponding to one codepoint in the TCI field of the first downlink control information (DCI). That is, only the first MAC CE is sent and the DCI is not sent. The N TCI states indicated in the first MAC CE only correspond to one codepoint in the TCI field of the DCI. Therefore, there is no need for the base station to additionally send DCI to the terminal to indicate the codepoint, thereby saving signaling overhead.

In some embodiments, the second indication information is carried in a second MAC CE and a second DCI. The second MAC CE is used to indicate the N TCI states respectively corresponding to at least two codepoints in the TCI field of the second DCI, and the second DCI is used to indicate one of the at least two codepoints. That is, both the second MAC CE and the second DCI are used to indicate the second indication information. The second MAC CE indicates the N TCI states respectively corresponding to at least two codepoints in the TCI field of the second DCI, and the second DCI is used to indicate a codepoint. By querying the second MAC CE, the N TCI states corresponding to the codepoint are obtained. In this case, the second MAC CE can indicate multiple sets of codepoint configurations, and each set of codepoint configurations corresponding to N TCI states. It should be noted that for each codepoint corresponding to N TCI states, the value of N corresponding to each codepoint may be the same or different.

In the embodiments of the present application, the first DCI and the second DCI may be the same DCI, or the first DCI and the second DCI may be different DCIs, which is not limited in the embodiments of the present application.

It should be noted that the embodiments of the present application describe how the second indication information indicates N TCI states. However, in another embodiment, X TCI states among the N TCI states are used for the transmission of at least one other channel/signal. X is a positive integer and X is not greater than N.

The signal may be understood as a reference signal. The other channel includes a channel other than the PDSCH channel.

In the embodiments of the present application, the other channel may also be transmitted using some or all of the N TCI states, and additional signals may also be transmitted using some or all of the N TCI states.

In some embodiments, the other channels include at least one of PUCCH, PUSCH, or PDCCH. That is to say, at least one of PUCCH, PUSCH, or PDCCH may utilize X TCI states among the N TCI states.

In some embodiments, at least one signal includes at least one of CSI-RS or SRS. That is to say, at least one of CSI-RS or SRS may utilize X TCI states among the N TCI states.

It should be noted that the X TCI states in the present application are a subset of the N TCI states, meaning that X may be less than or equal to N. In the following, the X TCI states will be specifically described.

In some embodiments, the other channel includes the PDCCH, or the at least one signal is the CSI-RS, then the X TCI states are a subset of the N TCI states. The TCI states include a joint TCI state and/or a downlink TCI state.

In some embodiments, the other information includes at least one of the PUSCH or the PUCCH, or at least one signal includes the SRS. The X TCI states include a joint TCI state and/or an uplink TCI state, and the N TCI states indicated by the second indication information include the joint TCI state and/or the uplink TCI state. The X TCI states are a subset of the N TCI states.

FIG. 5 illustrates a flowchart of an information indication method provided by an exemplary embodiment of the present application, which may be exemplarily applied to the network device shown in FIG. 1. The method includes at least some of the following contents.

In step 501, the network device sends first indication information to the terminal. The first indication information is used by the terminal to determine whether first downlink control information (DCI) includes a first information field. The first information field is used for instructing the terminal to use M TCI states for receiving a physical downlink shared channel (PDSCH). The TCI states include at least one of a joint TCI state, a downlink TCI state, and an uplink TCI state. M is a positive integer.

The first DCI refers to the information about the parameters configured by the network device for the terminal. Optionally, the first DCI may be downlink control information (DCI), or other types of information.

The first indication information indicates whether the first DCI includes the first information field.

The first information field instructs the terminal to use M TCI states for performing PDSCH transmission. That is to say, the terminal performs PDSCH reception based on M TCI states.

In some embodiments, the network device sends second indication information to the terminal, and indicates N TCI states through this second indication information. N is a positive integer and M is not greater than N. The M TCI states belong to a subset of the N TCI states indicated by the second indication information. In other words, the first information field instructs the terminal to use M TCI states of the N TCI states indicated by the second indication information for receiving PDSCH. The terminal selects M TCI states from the N TCI states indicated by the second indication information for receiving PDSCH.

The second indication information is used to indicate N TCI states. That is to say, the network device sends the second indication information that indicates the N TCI states to the terminal. After receiving the second indication information, the terminal may determine the N TCI states configured by the network device for the terminal based on the second indication information.

For example, the N TCI states indicated by the second indication information include TCI state #1, TCI state #2, TCI state #3, TCI state #4, TCI state #5, and TCI state #6. The M TCI states indicated by the first information field are TCI state #1, TCI state #2, TCI state #4, and TCI state #5 among the N TCI states.

For example, the N TCI states indicated by the second indication information include TCI state #1 and TCI state #2, and the M TCI state indicated by the first information field is TCI state #1 among the N TCI states.

For example, the N TCI states indicated by the second indication information include TCI state #1, TCI state #2, TCI state #3, and TCI state #4, and the M TCI states indicated by the first information field are TCI state #1 and TCI state #2 among the N TCI states.

The TCI state includes at least one of the joint TCI state, the downlink TCI state, and the uplink TCI state. The joint TCI state may be used for both uplink transmission and downlink transmission. The uplink TCI state is used for uplink transmission. The downlink TCI state is used for downlink transmission.

In the embodiments of the present application, the network device sends first indication information to the terminal for indicating whether the first DCI includes the first information field. Upon receiving the first indication information, the terminal may determine whether the first DCI includes the first information field, and further determine whether the M TCI states to be used may be determined based on the first information field.

The present application provides a solution for determining, by means of indication information, whether the control information includes an information field for indicating the TCI state to be used, to ensure the accuracy of decoding the control information, thereby improving the accuracy of the determined TCI state and ensuring the reliability of transmission.

The embodiment shown in FIG. 5 explains the terminal receiving the first indication information. Specifically, the terminal will determine whether the first DCI includes the first information field according to the first indication information. The following describes how the terminal determines whether the first DCI includes the first information field according to the first indication information.

In some embodiments, the first indication information is used to indicate the target PDSCH transmission scheme.

In the case where the first indication information indicates the target PDSCH transmission scheme, the first DCI includes a first information field. That is to say, if the PDSCH transmission scheme indicated by the first indication information is the target PDSCH transmission scheme, it indicates that the first DCI includes the first information field.

The target PDSCH transmission scheme refers to the PDSCH transmission scheme indicated by the network device for the terminal that requires the use of at least two TCI states.

Optionally, the target PDSCH transmission scheme includes at least one of the following.

### (1) Frequency-division multiplexing scheme A.

This frequency-division multiplexing scheme A may also be represented by FDM scheme A. This frequency-division multiplexing scheme A means that two TCI states correspond to different frequency domain resources and correspond to the same redundancy version. That is to say, the terminal may assume that different TCI states are used to receive a PDSCH transmission occasion of a TB in different frequency domain resources.

### (2) Frequency-division multiplexing scheme B.

This frequency-division multiplexing scheme B may also be represented by FDM scheme B. This frequency-division multiplexing scheme B means that two TCI states correspond to different frequency domain resources and correspond to different redundancy versions. That is to say, the terminal may assume that different TCI states are used to receive two PDSCH transmission occasions of a TB in different frequency domain resources.

### (3) Time-division multiplexing scheme A.

This time-division multiplexing scheme A may also be represented by TDM scheme A. This time-domain multiplexing scheme A means that different TCI states correspond to different time-domain resources.

### (4) Single-frequency network scheme A.

This single-frequency network scheme A may also be represented by SFN-scheme A. This single-frequency network scheme A means that if the network device indicates at least two TCI states, the terminal assumes that the DMRS port used for transmitting PDSCH is quasi-co-located with a reference signal corresponding to the at least two TCI states.

### (5) Single-frequency network scheme B.

This single-frequency network scheme B may also be represented by SFN-scheme B. This single-frequency network scheme B means that if the network device indicates at least two TCI states, the terminal assumes that the DMRS port used for transmitting PDSCH is quasi-co-located with a reference signal corresponding to the at least two TCI states, except for the quasi-co-location parameters of the last TCI state: {Doppler shift, Doppler spread}.

### (6) Transmission scheme based on two code division multiplexing (CDM) groups.

The DMRS port used for transmitting PDSCH corresponds to at least two CDM groups, and the TCI states corresponding to the at least two CDM groups are different.

In the embodiment of the present application, if the terminal determines that the PDSCH transmission scheme indicated by the first indication information is any of the above six PDSCH transmission schemes, the terminal may determine that the first DCI includes the first information field.

It should be noted that the embodiment of the present application is described by taking the example where the terminal determines that the first DCI includes the first information field when determining that the PDSCH transmission scheme indicated by the first indication information is the target PDSCH transmission scheme. In another embodiment, the terminal also determines that the first DCI does not include the first information field.

The embodiment of the present application provides a solution for determining whether the first DCI includes the first information field according to the PDSCH transmission scheme indicated by the first indication information, which ensures the reliability of determining whether the first DCI includes the first information field and improves the accuracy of terminal in decoding the first DCI, thereby ensuring the reliability of determining the PDCCH that carries the first DCI and the corresponding PDSCH transmission.

The embodiment shown in FIG. 5 illustrates the network device sending the first indication information. The following describes how the terminal determines whether the first DCI includes the first information field according to the first indication information.

In some embodiments, the first indication information is carried in an RRC signaling, which is used to indicate whether the first DCI includes the first information field. That is to say, the RRC signaling directly carries information for indicating whether the first DCI includes the first information field. For example, the RRC signaling indicates the information about whether the first DCI includes the first information field by using 1-bit. If the 1-bit in the RRC signaling is 1, it indicates that the first information field is included in the first DCI; if the 1-bit in the RRC signaling is 0, it indicates that the first information field is included in the first DCI. For example, this RRC signaling uses "enable" to indicate the information that the first DCI includes the first information field; and/or uses "disable" to indicate the information that the first DCI does not include the first information field.

In the solution provided in the embodiments of the present application, whether the first DCI includes the first information field may be determined based on the first indication information, which ensures the reliability of the terminal in determining whether the first DCI includes the first information field and improves the accuracy of the terminal in decoding the first DCI, thereby ensuring the reliability of determining the PDCCH that carries the first DCI and corresponding PDSCH transmission.

In the embodiment shown in FIG. 5, it is proposed whether the first DCI includes the first information field, and the parameters included in the first DCI are described below.

In some embodiments, the first DCI includes downlink resource allocation information, or the first DCI does not include downlink resource allocation information.

The downlink resource configuration information refers to the information about resources configured for the terminal for downlink transmission.

Optionally, the downlink resource allocation information includes at least one of the following.
(1) Time-domain resource information for PDSCH.
   The time-domain resource information is used to indicate time-domain resources, that is to say, the time-domain resource information indicates the time-domain resources used for PDSCH.
(2) Modulation and coding scheme field for PDSCH.
(3) Redundancy versions for PDSCH.
(4) Frequency domain resource information for PDSCH.
   The frequency domain resource information is used to indicate frequency domain resources, that is to say, the frequency domain resource information indicates the frequency domain resources used for PDSCH.
(5) Hybrid Automatic Repeat reQuest (HARQ) processing number.

It should be noted that the embodiments of the present application are described by taking several parameters exemplified above as examples. However, the present application is not limited to these exemplified parameters, and may also include other relevant parameters, which is not limited in the embodiments of the present application.

In some embodiments, the first DCI that does not include downlink resource allocation information has the following characteristics, namely, includes at least one of the following.
(1) A modulation and coding scheme field for the PDSCH is all '1'.
(2) A redundancy version field used for the PDSCH is all '1'.
(3) A new data indicator (NDI) used to indicate whether the PDSCH is new data is '0'.
(4) A frequency domain resource information allocation field for the PDSCH is either all '0' or all '1'.

In the embodiments of the present application, the first DCI does not include downlink resource allocation information, which means that the first DCI includes at least one of the above four information fields with the above special bit value. For example, the frequency domain resource information allocation field for PDSCH in the first DCI is either all '0' or all '1'.

It should be noted that the embodiments of the present application are described by taking the features of the first DCI that does not include downlink resource allocation information as an example. In other embodiments, the features of the first DCI that includes downlink resource allocation information are opposite to those of the above first DCI that does not include downlink resource allocation information.

Optionally, the first DCI including downlink resource allocation information has at least one of the following features.
(1) The modulation and coding scheme field for the PDSCH is not all '1'.
(2) The redundancy version field for PDSCH is not all '1'.
(3) The NDI used to indicate whether the PDSCH is new data is not '0'.
(4) The frequency domain resource information allocation field for the PDSCH is not all '0' or not all '1'.

The embodiment shown in FIG. 5 proposes that the second indication information may indicate N TCI states. The following describes how the second indication information indicates the N TCI states.

In some embodiments, the second indication information is carried in a first medium access control (MAC) control element (CE), and the first MAC CE is used to indicate N TCI states.

Optionally, the first MAC CE is used to indicate the N TCI states corresponding to one codepoint in the TCI field of the first downlink control information (DCI). That is, only the first MAC CE is sent and the DCI is not sent. The N TCI states indicated in the first MAC CE only correspond to one codepoint in the TCI field of the DCI. Therefore, there is no need for the base station to additionally send DCI to the terminal to indicate the codepoint, thereby saving signaling overhead.

In some embodiments, the second indication information is carried in a second MAC CE and a second DCI. The second MAC CE is used to indicate the N TCI states respectively corresponding to at least two codepoints in the TCI field of the second DCI, and the second DCI is used to indicate one of the at least two codepoints. That is, both the second MAC CE and the second DCI are used to indicate the second indication information. The second MAC CE indicates the N TCI states respectively corresponding to at least two codepoints in the TCI field of the second DCI, and the second DCI is used to indicate a codepoint. By querying the second MAC CE, the N TCI states corresponding to the codepoint are obtained. In this case, the second MAC CE can indicate multiple sets of codepoint configurations, and each set of codepoint configurations corresponding to N TCI states. It should be noted that for each codepoint corresponding to N TCI states, the value of N corresponding to each codepoint may be the same or different.

In the embodiments of the present application, the first DCI and the second DCI may be the same DCI, or the first DCI and the second DCI may be different DCIs, which is not limited in the embodiments of the present application.

It should be noted that the embodiments of the present application describe how the second indication information indicates N TCI states. However, in another embodiment, X TCI states among the N TCI states are used for the transmission of at least one other channel/signal. X is a positive integer and X is not greater than N.

The signal may be understood as a reference signal. The other channel includes a channel other than the PDSCH channel.

In the embodiments of the present application, the other channel may also be transmitted using some or all of the N TCI states, and additional signals may also be transmitted using some or all of the N TCI states.

In some embodiments, the other channel includes at least one of PUCCH, PUSCH, or PDCCH. That is to say, at least one of PUCCH, PUSCH, or PDCCH may utilize X TCI states among the N TCI states.

In some embodiments, at least one signal includes at least one of CSI-RS or SRS. That is to say, at least one of CSI-RS or SRS may utilize X TCI states among the N TCI states.

It should be noted that the X TCI states in the present application are a subset of the N TCI states, that is, X may be less than or equal to N. In the following, the X TCI states will be specifically described.

In some embodiments, the other channel includes the PDCCH, or the at least one signal is the CSI-RS, then the X TCI states are a subset of the N TCI states. The TCI states include a joint TCI state and/or a downlink TCI state.

In some embodiments, the other information includes at least one of the PUSCH or the PUCCH, or at least one signal includes the SRS. The X TCI states include a joint TCI state and/or an uplink TCI state, and the N TCI states indicated by the second indication information include the joint TCI state and/or the uplink TCI state. The X TCI states are a subset of the N TCI states.

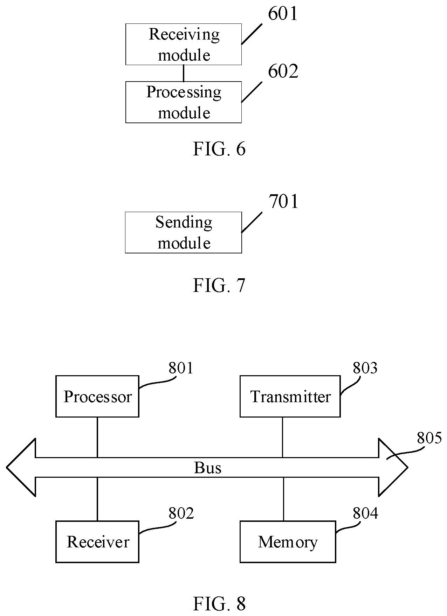

FIG. 6 shows a block diagram of an information indication apparatus provided in an exemplary embodiment of the present application. Referring to FIG. 6, the apparatus includes:

a receiving module 601, configured to receive first indication information sent by a network device; and

a processing module 602, configured to determine whether first DCI includes a first information field according to the first indication information, where the first information field is used for instructing the terminal to use M TCI states for receiving a PDSCH, the TCI states include at least one of a joint TCI state, a downlink TCI state, and an uplink TCI state, and M is a positive integer.

In some embodiments, the first indication information is used to indicate a target PDSCH transmission scheme. The processing module 602 is configured to determine that the first information field is included in the first DCI if the first indication information indicates the target PDSCH transmission scheme.

In some embodiments, the target transmission scheme includes at least one of the following:
a frequency-division multiplexing scheme A;
a frequency-division multiplexing scheme B;
a time-division multiplexing scheme A;
a single-frequency network scheme A;
a single-frequency network scheme B; and
a transmission scheme based on two code division multiplexing (CDM) groups.

In some embodiments, the processing module 602 is configured to determine that the first information field is not included in the first DCI when the first indication information does not indicate the target PDSCH transmission scheme.

In some embodiments, the processing module 602 is configured to determine that the first information field is not included in the first DCI when the first indication information is not received.

In some embodiments, the first indication information is carried in an RRC signaling, which is used to indicate whether the first DCI includes the first information field.

In some embodiments, the first DCI includes downlink resource allocation information or does not include downlink resource allocation information.

In some embodiments, the first DCI not including the downlink resource allocation information includes at least one of the following:
a modulation and coding scheme field for the PDSCH being all '1';
a redundancy version field for PDSCH being all '1';
a new data indicator (NDI) used to indicate whether the PDSCH is new data being '0'; and
a frequency domain resource information allocation field for the PDSCH being either all '0' or all '1'.

In some embodiments, the receiving module 601 is further configured to receive second indication information sent by the network device. The second indication information is used to indicate N TCI states, where N is a positive integer and M is not greater than N. The M TCI states belong to a subset of the N TCI states indicated by the second indication information.

In some embodiments, the second indication information is carried in a first medium access control control element (MAC CE), and the first MAC CE is used to indicate the N TCI states; or,

the second indication information is carried in a second MAC CE and a second DCI, the second MAC CE is used to indicate the N TCI states corresponding to at least two codepoints respectively in a transmission configuration indication (TCI) field of the second DCI, and the second DCI is used to indicate one of the at least two codepoints.

In some embodiments, X TCI states among the N TCI states are used for a transmission of at least one other channel/signal, X is a positive integer and X is not greater than N.

In some embodiments, the at least one other channel includes at least one of the following:
a PUCCH;
a PUSCH; and
a PDCCH.

In some embodiments, the at least one signal includes at least one of the following:
a CSI-RS; and
a SRS.

In some embodiments, the X TCI states are a subset of the N TCI states.

It should be noted that the apparatus provided in the above embodiments is exemplified only based on the division of the above functional modules when achieving its functions. In practical applications, the above functions may be assigned to different functional modules as needed, that is, the internal structure of the device can be divided into different functional modules to achieve all or part of the functions described above. In addition, the apparatus provided in the above embodiments belongs to the same concept as the method embodiments, and the specific implementation process of the apparatus is detailed in the method embodiments, which will not be repeated here.

FIG. 7 illustrates a block diagram of an information indication apparatus provided in an exemplary embodiment of the present application. Referring to FIG. 7, the apparatus includes:
a sending module 701, configured to send first indication information to a terminal, where the first indication information is used for the terminal to determine whether a first information field is included in a first DCI, and the first information field is used for instructing the terminal to use M TCI states for receiving a PDSCH, where the TCI states include at least one of a joint TCI state, a downlink TCI state, and an uplink TCI state, and M is a positive integer.

In some embodiments, the first indication information is used to indicate a PDSCH transmission scheme; the first indication information indicating the target PDSCH transmission scheme is used for the terminal to determine that the first DCI includes the first information field.

In some embodiments, the target transmission scheme includes at least one of the following:
a frequency-division multiplexing scheme A;
a frequency-division multiplexing scheme B;
a time-division multiplexing scheme A;
a single-frequency network scheme A;
a single-frequency network scheme B; and
a transmission scheme based on two code division multiplexing (CDM) groups.

In some embodiments, the first indication information is carried in an RRC signaling, which is used to indicate whether the first DCI includes the first information field.

In some embodiments, the first DCI includes downlink resource allocation information or does not include the downlink resource allocation information.

In some embodiments, the first DCI not including the downlink resource allocation information includes at least one of the following:
a modulation and coding scheme field for the PDSCH being all '1';
a redundancy version field for PDSCH being all '1';
a new data indicator (NDI) used to indicate whether the PDSCH is new data being '0'; and
a frequency domain resource information allocation field for the PDSCH being either all '0' or all '1'.

In some embodiments, the sending module 701 is configured to send second indication information to the terminal. The second indication information is used to indicate N TCI states, where N is a positive integer and M is not greater than N. The M TCI states belong to a subset of the N TCI states indicated by the second indication information.

In some embodiments, the second indication information is carried in a first medium access control (MAC) control element (CE), and the first MAC CE is used to indicate the N TCI states; or,
the second indication information is carried in a second MAC CE and a second DCI, the second MAC CE is used to indicate the N TCI states corresponding to at least two codepoints respectively in a TCI field of the second DCI, and the second DCI is used to indicate one of the at least two codepoints.

In some embodiments, X TCI states among the N TCI states are used for a transmission of at least one other channel/other signal, where X is a positive integer and X is not greater than N.

In some embodiments, the at least one other channel includes at least one of the following:
a PUCCH;
a PUSCH; and
a PDCCH.

In some embodiments, the at least one signal includes at least one of the following:
a CSI-RS; and
a SRS.

In some embodiments, the X TCI states are a subset of the N TCI states.

It should be noted that the apparatus provided in the above embodiments is exemplified only based on the division of the above functional modules when achieving its functions. In practical applications, the above functions may be assigned to different functional modules as needed, that is, the internal structure of the device can be divided into different functional modules to achieve all or part of the functions described above. Additionally, the apparatus provided in the above embodiments belongs to the same concept as the method embodiments, and the specific implementation process of the apparatus is detailed in the method embodiments, which will not be further elaborated here.

FIG. 8 illustrates a structural schematic diagram of a communication device provided in an exemplary embodiment of the present application. The communication device includes: a processor 801, a receiver 802, a transmitter 803, a memory 804, and a bus 805.

The processor 801 includes one or more processing cores, and executes various functional applications and information processing by running software programs and modules.

The receiver 802 and the transmitter 803 may be implemented as one communication component, which can be a communication chip.

The memory 804 is connected to the processor 801 via the bus 805.

The memory 804 may be used to store at least one program code, and the processor 801 is used to execute the at least one program code, so as to implement each step in the above method embodiments.

In addition, the communication device may be a terminal or a network device. The memory 804 may be implemented by any type of volatile or non-volatile storage device, or a combination thereof. The volatile or non-volatile storage device includes, but are not limited to: a magnetic or optical disk, an electrically erasable programmable read-only memory (EEPROM), an erasable programmable read-only memory (EPROM), a static random access memory (SRAM), a read-only memory (ROM), a magnetic storage, a flash memory, and a programmable read-only memory (PROM).

In an exemplary embodiment, a computer-readable storage medium is also provided, in which an executable program code is stored. The executable program code is loaded and executed by a processor to implement the information indication method executed by a communication device provided by the various method embodiments described above.

In an exemplary embodiment, a chip is provided, which includes a programmable logic circuit and/or a program instruction. When the chip operates on a terminal or a network device, it is used to implement the information indication method provided in various method embodiments.

In an exemplary embodiment, a communication system is provided, which includes a terminal and a network device. The terminal is used to implement the information indication method as described above, and the network device is used to implement the information indication method as described above.

In an exemplary embodiment, a computer program product is provided. When executed by a processor of a terminal or a network device, the computer program product is used to implement the information indication method provided in the various method embodiments described above.

Those skilled in the art can understand that all or part of the steps for implementing the above embodiments can be accomplished through hardware, or alternatively, by instructing relevant hardware through a program. The program can be stored in a computer-readable storage medium, and the above storage medium can be a read-only memory, magnetic disk, optical disk, or the like.

The above description is only optional embodiments of the present application and is not intended to limit the present application. Any modifications, equivalent substitutions, improvements, and the like made within the spirit and principles of the present application shall be included within the scope of protection of the present application.

## Claims

1. An information indication method, wherein the method is performed by a terminal, and the method comprises:
receiving first indication information sent by a network device, and determining whether first downlink control information (DCI) comprises a first information field according to the first indication information, wherein the first information field is used for instructing the terminal to use M TCI states for receiving a physical downlink shared channel (PDSCH), the TCI states comprise at least one of a joint TCI state, a downlink TCI state, and an uplink TCI state, and M is a positive integer.

2. The method according to claim 1, wherein the first indication information is used to indicate a target PDSCH transmission scheme, and determining whether the first DCI comprises the first information field according to the first indication information comprises:
in a case that the first indication information indicates the target PDSCH transmission scheme, determining that the first DCI comprises the first information field.

3. The method according to claim 2, wherein a target transmission scheme comprises at least one of following:
a frequency-division multiplexing scheme A;
a frequency-division multiplexing scheme B;
a time-division multiplexing scheme A;
a single-frequency network scheme A;
a single-frequency network scheme B; and
a transmission scheme based on two code division multiplexing (CDM) groups.

4. The method according to claim 2, wherein determining whether the first DCI comprises the first information field according to the first indication information comprises:
in a case that the first indication information does not indicate the target PDSCH transmission scheme, determining that the first DCI does not comprise the first information field.

5. The method according to claim 1, wherein the method further comprises:
in a case that the first indication information is not received, determining that the first DCI does not comprise the first information field.

6. The method according to claim 1, wherein the first indication information is carried in an RRC signaling, and the RRC signaling is used to indicate whether the first DCI comprises the first information field.

7. The method according to any one of claims 1 to 6, wherein the first DCI comprises downlink resource allocation information or does not comprise the downlink resource allocation information.

8. The method according to claim 7, wherein the first DCI not comprising the downlink resource allocation information comprises at least one of following:
a modulation and coding scheme field for the PDSCH being all '1';
a redundancy version field for the PDSCH being all '1';
a new data indicator (NDI) used to indicate whether the PDSCH is new data being '0'; and
a frequency domain resource information allocation field for the PDSCH being either all '0' or all '1'.

9. The method according to any one of claims 1 to 8, wherein the method further comprises:
receiving second indication information sent by the network device, wherein the second indication information is used to indicate N TCI states, N is a positive integer and M is not greater than N; and wherein the M TCI states belong to a subset of the N TCI states.

10. The method according to claim 9, wherein,
the second indication information is carried in a first medium access control control element (MAC CE), and the first MAC CE is used to indicate the N TCI states; or,
the second indication information is carried in a second MAC CE and a second DCI, the second MAC CE is used to indicate the N TCI states corresponding to at least two codepoints respectively in a transmission configuration indication (TCI) field of the second DCI, and the second DCI is used to indicate one of the at least two codepoints.

11. The method according to claim 10, wherein X TCI states among the N TCI states are used for a transmission of at least one other channel/signal, X is a positive integer and X is not greater than N.

12. The method according to claim 11, wherein the at least one other channel comprises at least one of following:
a physical uplink control channel (PUCCH);
a physical uplink shared channel (PUSCH); and
a physical downlink control channel (PDCCH).

13. The method according to claim 11, wherein the at least one signal comprises at least one of following:
a channel state information reference signal (CSI-RS); and
a sounding reference signal (SRS).

14. The method according to claim 11, wherein the X TCI states are a subset of the N TCI states.

15. An information indication method, wherein the method is performed by a network device, and the method comprises:
sending first indication information to a terminal, wherein the first indication information is used for the terminal to determine whether first downlink control information (DCI) comprises a first information field, and the first information field is used for instructing the terminal to use M TCI states for receiving a physical downlink shared channel (PDSCH), wherein the TCI states comprise at least one of a joint TCI state, a downlink TCI state, and an uplink TCI state, and M is a positive integer.

16. The method according to claim 15, wherein the first indication information is used to indicate a target PDSCH transmission scheme; and the first indication information indicating the target PDSCH transmission scheme is used for the terminal to determine that the first DCI comprises the first information field.

17. The method according to claim 16, wherein the target PDSCH transmission scheme comprises at least one of following:
a frequency-division multiplexing scheme A;
a frequency-division multiplexing scheme B;
a time-division multiplexing scheme A;
a single-frequency network scheme A;
a single-frequency network scheme B; and
a transmission scheme based on two code division multiplexing (CDM) groups.

18. The method according to claim 15, wherein the first indication information is carried in an RRC signaling, and the RRC signaling is used to indicate whether the first DCI comprises the first information field.

19. The method according to any one of claims 15 to 18, wherein the first DCI comprises downlink resource allocation information or does not comprise the downlink resource allocation information.

20. The method according to claim 19, wherein the first DCI not comprising the downlink resource allocation information comprises at least one of following:
a modulation and coding scheme field for the PDSCH being all '1';
a redundancy version field for the PDSCH being all '1';
a new data indicator (NDI) used to indicate whether the PDSCH is new data being '0'; and
a frequency domain resource information allocation field for the PDSCH being either all '0' or all '1'.

21. The method according to any one of claims 15 to 20, wherein the method further comprises:
sending second indication information to the terminal, wherein the second indication information is used to indicate N TCI states, N is a positive integer and M is not greater than N; and wherein the M TCI states belong to a subset of the N TCI states.

22. The method according to claim 21, wherein,
the second indication information is carried in a medium access control control element (MAC CE), and the first MAC CE is used to indicate the N TCI states; or,
the second indication information is carried in a second MAC CE and a second DCI, the second MAC CE is used to indicate the N TCI states corresponding to at least two codepoints respectively in a TCI field of the second DCI, and the second DCI is used to indicate one of the at least two codepoints.

23. The method according to claim 22, wherein X TCI states among the N TCI states are used for a transmission of at least one other channel/other signal, X is a positive integer and X is not greater than N.

24. The method according to claim 23, wherein the at least one other channel comprises at least one of following:
a physical uplink control channel (PUCCH);
a physical uplink shared channel (PUSCH); and
a physical downlink control channel (PDCCH).

25. The method according to claim 23, wherein the at least one signal comprises at least one of following:
a channel state information reference signal (CSI-RS); and
a sounding reference signal (SRS).

26. The method according to claim 23, wherein the X TCI states are a subset of the N TCI states.

27. An information indication apparatus, wherein the apparatus is performed by a terminal, and the apparatus comprises:
a receiving module, configured to receive first indication information sent by a network device; and
a processing module, configured to determine whether first downlink control information (DCI) comprises a first information field according to the first indication information, wherein the first information field is used for instructing the terminal to use M TCI states for receiving a physical downlink shared channel (PDSCH), the TCI states comprise at least one of a joint TCI state, a downlink TCI state, and an uplink TCI state, and M is a positive integer.

28. An information indication apparatus, wherein the apparatus is performed by a network device, and the apparatus comprises:
a sending module, configured to send first indication information to a terminal, wherein the first indication information is used for the terminal to determine whether first downlink control information (DCI) comprises a first information field, and the first information field is used for instructing the terminal to use M TCI states for receiving a physical downlink shared channel (PDSCH), wherein the TCI states comprise at least one of a joint TCI state, a downlink TCI state, and an uplink TCI state, and M is a positive integer.

29. A terminal, comprising:
a processor; and
a transceiver, connected to the processor;
wherein the processor is configured to load and perform an executable instruction to implement the information indication method according to any one of claims 1 to 14.

30. A network device, comprising:
a processor; and
a transceiver, connected to the processor;
wherein the processor is configured to load and perform an executable instruction to implement the information indication method according to any one of claims 15 to 26.

31. A communication system, comprising a terminal and a network device, wherein the terminal is configured to implement the information indication method according to any one of claims 1 to 14, and the network device is configured to implement the information indication method according to any one of claims 15 to 26.

32. A computer-readable storage medium, wherein executable program codes are stored in the readable storage medium, and the executable program codes are loaded and performed by a processor to implement the information indication method according to any one of claims 1 to 26.
